# EUROPÄISCHE PATENTSCHRIFT

(11) **EP 2 600 122 B1**
(45) Veröffentlichungstag und Bekanntmachung des Hinweises auf die Patenterteilung: **16.06.2021**
(21) Anmeldenummer: 12007209.5
(22) Anmeldetag: 18.10.2012
(51) Int. Cl.: G01F 1/84

(54) **Coriolis-Massedurchflussmessgerät**
Coriolis mass flow measuring device
Débitmètre massique du type Coriolis

(30) Priorität: 02.12.2011 DE 102011119980
(43) Veröffentlichungstag der Anmeldung: 05.06.2013
(73) Patentinhaber: Krohne AG, 4019 Basel (CH)
(72) Erfinder: Wang, Tao, Dr., Canterbury Kent CT2 9DG (GB); Hussain, Yousif, Dr., Weston Favell Northampton NN 3 3 DA (GB)
(74) Vertreter: Gesthuysen Patentanwälte

(56) Entgegenhaltungen:
- EP-A1- 2 559 976
- DE-A1- 10 237 209
- US-A- 4 825 705
- US-A1- 2006 016 273
- US-A1- 2007 151 369
- US-A1- 2011 167 907
- US-B1- 6 308 580

## Beschreibung

Die Erfindung betrifft ein Coriolis-Massedurchflussmessgerät gemäß dem Oberbegriff von Patentanspruch 1.

Massedurchflussmessgeräte, die nach dem Coriolis-Prinzip arbeiten, sind in einer Vielzahl von Ausgestaltungen im Stand der Technik bekannt. Coriolis-Massedurchflussmessgeräte erlauben die Bestimmung des Massedurchsatzes des durch das Messrohr strömenden Mediums mit hoher Genauigkeit. Um den Massedurchsatz zu ermitteln, wird das Messrohr mit einem Schwingungserzeuger oder auch mit mehreren Schwingungserzeugern zu Schwingungen - insbesondere mit der Eigenfrequenz einer bestimmten Eigenform einer Schwingung - angeregt, und die tatsächlich resultierenden Schwingungen werden mit Schwingungsaufnehmern erfasst und ausgewertet. Die Aktuatoranordnung zur Schwingungserzeugung und die Sensoranordnungen zur Schwingungserfassung sind im Allgemeinen derart aufgebaut, dass sie einen Permanentmagneten sowie eine Magnetspule aufweisen, um auf elektrischem Wege Schwingungen auf das Messrohr zu übertragen bzw. Schwingungen des Messrohrs zu erfassen, auf die konkrete Ausgestaltung kommt es vorliegend jedoch nicht an.

Zur Auswertung und zur Bestimmung des Massedurchsatzes wird die Phasenverschiebung zwischen den von zwei Sensoranordnungen jeweils erfassten Schwingungen verschiedener Abschnitte der Messrohre ermittelt, wobei diese Phasenverschiebung ein direktes Maß für den Massedurchsatz ist. Seit vielen Jahren sind Coriolis-Massedurchflussmessgeräte bekannt, die ein einziges Messrohr aufweisen, wie auch solche, die genau zwei oder vier Messrohre aufweisen, wobei die Messrohre entweder im Wesentlichen gerade erstreckt oder gekrümmt sind.

Mit welcher Genauigkeit der Massedurchsatz erfasst werden kann, hängt unter anderem davon ab, ob die von den Sensoranordnungen erfassten Schwingungen von Störschwingungen überlagert werden. Um unerwünschte Schwingungsmodi so weit wie möglich von der Arbeitsfrequenz des Coriolis-Massedurchflussmessgeräts zu entfernen, werden die Schwingungseigenschaften der Messrohranordnung konstruktiv, beispielsweise durch Veränderung der Biegesteifigkeit einzelner Bauelemente, verändert, so dass keine Störschwingungen in unmittelbarer Nähe zur Arbeitsfrequenz des Coriolis-Massedurchflussmessgeräts entstehen.

Bekannt ist der Einsatz von Schwingungsknotenplatten zur mechanischen Definition schwingfähiger Bereiche bei den Messrohren von Coriolis-Massedurchflussmessgeräten, beispielsweise aus der US 6,308,580 B1, der US 2007/0151369 A1 und der US 2011/0167907. Auch sind Schwingungsknotenplatten bekannt, die mit anderen konstruktiven Teilen eines Coriolis-Massedurchflussmessgeräts verbunden sind (US 2006/016273).

Der Erfindung liegt daher die Aufgabe zugrunde, ein Coriolis-Massedurchflussmessgerät mit gesteigerter Messgenauigkeit und einer verminderten Anfälligkeit für Störschwingungen anzugeben.

Die vorgenannte Aufgabe wird gelöst mit den Merkmalen des Kennzeichnungsteils von Patentanspruch 1.

Bekannt ist, dass einlaufseitig und auslaufseitig mindestens eine der Schwingungsknotenplatten mit der Gehäusestruktur des Coriolis-Massedurchflussmessgeräts verbunden ist. Die Messrohre verlaufen zwischen der Einlaufseite und der Auslaufseite, wobei zwischen der Einlaufseite und der Auslaufseite die Messung des Massedurchsatzes durch Erfassung der Phasendifferenz erfolgt. Sowohl auf der Einlaufseite als auch auf der Auslaufseite sind die Messrohre in ihren Endbereichen mit zwei Schwingungsknotenplatten, nämlich einer ersten Schwingungsknotenplatte und einer zweiten Schwingungsknotenplatte, zusammengefasst. Mindestens eine der Schwingungsknotenplatten, also die erste Schwingungsknotenplatte oder die zweite Schwingungsknotenplatte, ist einlaufseitig bzw. auslaufseitig mit der Gehäusestruktur des Coriolis-Massedurchflussmessgeräts verbunden. Mit "Gehäusestruktur" ist das Gehäuse oder ein Teil des Gehäuses des Coriolis-Massedurchflussmessgeräts gemeint, das im Betriebszustand nicht in Schwingung versetzt ist und zu den tragenden Bauelementen des Messgeräts zählt. Für den Fall, dass das Gehäuse überwiegend aus einem dünnen Mantel besteht, der auf einem Tragrahmen befestigt ist, ist mit der "Gehäusestruktur" beispielsweise auch dieser Tragrahmen gemeint. Ein solcher Tragrahmen wird häufig durch einen stabilen Tragbalken gebildet, der mit den einlaufseitigen und den auslaufseitigen Enden der Messrohre verbunden ist, ggf. auch mit den an diesen Enden vorgesehenen Flanschen

Die Verbindung zwischen der Schwingungsknotenplatte und der Tragstruktur bzw. der Gehäusestruktur des Coriolis-Massedurchflussmessgeräts erfolgt stoff-, form-, oder kraftschlüssig (reibschlüssig). Die Verbindung ist ferner als lösbare Verbindung oder alternativ als unlösbare Verbindung vorgesehen. Als vorteilhafte Verbindungen haben sich Anschrauben, Anschweißen oder eine formschlüssige Verbindung und eine kraftschlüssige Verbindung, indem sich die Schwingungsknotenplatte an der Gehäusestruktur abstützt, herausgestellt.

Vorzugsweise ist einlauf- und auslaufseitig jeweils diejenige Schwingungsknotenplatte mit der Gehäusestruktur des Coriolis-Massedurchflussmessgeräts verbunden, die sich am nächsten zum entsprechenden Rohrende der Messrohre, also dem einlaufseitigen oder dem auslaufseitigen Rohrende, befindet. Die verbleibende Schwingungsknotenplatte, die nicht mit der Gehäusestruktur des Coriolis-Massedurchflussmessgeräts verbunden ist, weist keinerlei Kontakt zur Gehäusestruktur des Coriolis-Massedurchflussmessgeräts auf und ist somit lediglich mit den Messrohren verbunden, indem sie an diesen befestigt ist.

Von den Schwingungsknotenplatten grundsätzlich zu unterscheiden sind solche Bauteile, beispielsweise Sammler oder Flansche, die die Messrohre an ihren Enden ggf. zusammenfassen, jedoch nicht primär zur Veränderung der Schwingungseigenschaften vorgesehen sind. Ein Coriolis-Massedurchflussmessgerät gemäß der Erfindung weist folglich mindestens zwei Messrohre auf, die somit nicht nur an ihren unmittelbaren Enden, z. B. über die Sammler, mit dem Gehäuse in Verbindung stehen, sondern zusätzlich auf beiden Seiten jeweils mit einer Schwingungsknotenplatte mit der Gehäusestruktur des Coriolis-Massedurchflussmessgeräts verbunden sind.

Das Coriolis-Massedurchflussmessgerät gemäß der vorliegenden Erfindung weist den Vorteil auf, dass ungewollte Schwingungsmodi von der Arbeitsfrequenz weg verschoben werden. Dadurch wird beispielsweise verhindert, dass die beiden gebogenen Messrohre gleichzeitig in axialer Richtung schwingen, ferner wird beispielsweise verhindert, dass die beiden gebogenen Messrohre gleichzeitig in gemeinsamer Phase orthogonal zur Strömungsrichtung schwingen.

Als besonders vorteilhaft zur Umsetzung der Aufgabe der vorliegenden Erfindung hat sich gemäß einer ersten Ausgestaltung herausgestellt, wenn einlaufseitig und auslaufseitig zusätzlich eine dritte Schwingungsknotenplatte angeordnet ist, vorzugsweise die dritte Schwingungsknotenplatte mit der Gehäusestruktur verbunden ist. In beiden Endbereichen der Messrohre, also einlaufseitig und auslaufseitig, sind somit jeweils drei Schwingungsknotenplatten vorgesehen, die die Messrohre miteinander verbinden. Einlaufseitig und auslaufseitig ist jeweils eine der Schwingungsknotenplatten mit der Tragstruktur bzw. der Gehäusestruktur des Coriolis-Massedurchflussmessgeräts verbunden, wobei es sich dabei vorzugsweise um die dritte Schwingungsknotenplatte handelt. Die dritte Schwingungsknotenplatte ist vorteilhaft am nächsten zum jeweiligen Rohrende angeordnet.

Die erste Schwingungsknotenplatte und die zweite Schwingungsknotenplatte sind folglich lediglich mit den Messrohren verbunden und dienen der Bildung von Schwingungsknoten im frei schwingenden Bereich der Messrohre. Die dritte Schwingungsknotenplatte dient auch zur Bildung eines Schwingungsknotens, ist jedoch zusätzlich mit der Gehäusestruktur des Coriolis-Massedurchflussmessgeräts verbunden, so dass unerwünschte Schwingungsmodi der Messrohre in der Nähe der Arbeitsfrequenz unterbunden werden.

Erfindungswesentlich ist, dass die mit der Gehäusestruktur verbundene Schwingungsknotenplatte eine Grundfläche aufweist, und dass die Grundfläche von den Messrohren durchtreten wird. Die Grundfläche ist vorzugsweise als flache, ebene Fläche ausgebildet, die von den Messrohren vorteilhaft orthogonal durchtreten wird. Je nach Ausgestaltung sind jedoch auch andere Winkel vorgesehen. Die Grundfläche der Schwingungsknotenplatte ist beispielsweise aus einem flachen Blech oder einer flachen Metallplatte gefertigt, so dass sich die Grundfläche lediglich in einer einzigen Ebene erstreckt. Wenn davon die Rede ist, dass sich die Schwingungsknotenplatte mit der Grundfläche lediglich in einer Ebene erstreckt, dann ist damit gemeint, dass sich die Grundfläche flach erstreckt, wobei die tatsächlich vorhandene Materialstärke der Grundfläche unberücksichtigt bleibt. Die Grundfläche weist Durchgangslöcher für die Messrohre auf, in deren Bereich auch eine Befestigung der Messrohre an der Schwingungsknotenplatte erfolgt. Vorzugsweise besteht die Schwingungsknotenplatte bei diesem Ausführungsbeispiel lediglich aus der Grundfläche.

Die Grundfläche ist beispielsweise rechteckig oder quadratisch ausgestaltet. Es ist jedoch auch vorgesehen, dass die Grundfläche eine runde, eine ovale oder eine andere Form aufweist. Symmetrische Formen - vorzugsweise mit einer Spiegel- oder Punktsymmetrie - haben sich für die Grundfläche als vorteilhaft herausgestellt. Bei einer quadratischen Grundfläche sind die Durchgangslöcher für die Messrohre vorzugsweise dezentral vorgesehen, so dass sich die Grundfläche auf einer Seite der Messrohre länger erstreckt als auf der anderen Seite der Messrohre, wodurch die Schwingungsknotenplatte mit ihrer auf einer Seite länger erstreckten Grundfläche mit der Gehäusestruktur verbunden werden kann bzw. in Verbindung steht. Mit dezentraler Anordnung der Messrohre ist dabei gemeint, dass die Durchgangslöcher für die Messrohre nebeneinander beispielsweise in einer der rechteckigen Hälften der quadratischen Grundfläche angeordnet sind, während sich die andere rechteckige Hälfte neben den Messrohren erstreckt.

Bei der in Rede stehenden Ausgestaltung ist des Weiteren vorzugsweise vorgesehen, dass die Schwingungsknotenplatte mit der Gehäusestruktur in kraftschlüssiger Verbindung - einem Reibkontakt - steht, so dass sich die Schwingungsknotenplatte mit ihrer Grundfläche - einem Teil der Grundfläche - an der Gehäusestruktur abstützt.

Erfindungsgemäß ist ferner vorgesehen, dass an der Grundfläche eine Erweiterung ausgebildet ist, und dass die Schwingungsknotenplatte mit der Erweiterung an der Gehäusestruktur befestigt ist. Die Schwingungsknotenplatte ist durch die Grundfläche mit der angeformten Erweiterung beispielsweise asymmetrisch ausgestaltet, wodurch die Biegesteifigkeit der Schwingungsknotenplatte in bestimmten Belastungsrichtungen gesteigert wird. Die Schwingungsknotenplatte ist mit der Erweiterung am Gehäuse befestigt, wobei die Erweiterung vorzugsweise eine derartige Länge aufweist, dass die Gehäusestruktur durch die Erweiterung, ausgehend von den Messrohren, erreicht wird. Die ErWeiterung ist vorzugsweise als Steg ausgestaltet, der an der Grundfläche angeformt ist.

Um eine vorteilhafte Biegesteifigkeit der Schwingungsknotenplatte zu erreichen, ist gemäß einer nicht zur Erfindung gehörenden Ausgestaltung vorgesehen, dass sich die Erweiterung in der Ebene der Grundfläche erstreckt, so dass die Schwingungsknotenplatte flach ausgestaltet ist. Die Grundfläche der Schwingungsknotenplatte erstreckt sich dabei vorzugsweise in einer Ebene, wobei die Materialstärke der Grundfläche bei dieser Betrachtung unberücksichtigt bleibt. Die Erweiterung erstreckt sich in der Ebene der Grundfläche, so dass die Schwingungsknotenplatte insgesamt flach ausgestaltet ist. Die Schwingungsknotenplatte ist mit der Erweiterung an der Gehäusestruktur des Coriolis-Massedurchflussmessgeräts befestigt. Dabei hat sich als vorteilhaft herausgestellt, wenn die Schwingungsknotenplatte mit der Erweiterung formschlüssig mit der Gehäusestruktur des Coriolis-Massedurchflussmessgeräts verbunden ist, indem die Erweiterung an der Gehäusestruktur formschlüssig umfasst wird. Je nach Ausgestaltung und Zielsetzung der Unterbindung von Schwingungen bzw. Verschiebung von Eigenfrequenzen ist vorgesehen, dass die formschlüssige Verbindung zwischen Erweiterung und Gehäusestruktur einen, mehrere oder keinen Freiheitsgrad der Bewegung der Erweiterung innerhalb der Einfassung an der Gehäusestruktur zulässt.

Gemäß einer weiteren nicht zur Erfindung gehörenden Ausgestaltung des Coriolis-Massedurchflussmessgeräts ist vorgesehen, dass die Grundfläche im Wesentlichen rechteckig ist, dass die Erweiterung an einer Seitenkante der Grundfläche ausgebildet ist, und dass die Erweiterung eine geringere Breite als die Seitenkante der Grundfläche aufweist. Die Grundfläche ist im Wesentlichen rechteckig ausgestaltet und weist eine Breite - die Erstreckung in der Richtung, in der die Messrohre nebeneinander angeordnet sind - auf, die etwa dem 2,25- bis 5-fachen eines Messrohrdurchmessers entspricht. Die Länge der Grundfläche - die Erstreckung in der Richtung eines Messrohres - entspricht etwa dem 1,5- bis 2-fachen eines Rohrdurchmessers. Die Erweiterung ist vorzugsweise an der breiten Seitenkante der Grundfläche angeordnet und erstreckt sich in der Ebene der Grundfläche. Die Erweiterung weist dabei eine geringere Breite als die Breite der Seitenkante der Grundfläche auf, an der sie angeordnet ist. Vorzugsweise entspricht die Breite der Erweiterung der Hälfte der Breite der Grundfläche, wobei die Erweiterung mittig an der Seitenkante angeordnet ist. Die Länge der Erweiterung ist derart vorgesehen, dass der Abstand zwischen den Messrohren und der Gehäusestruktur durch die Erweiterung zur Verbindung überbrückt wird.

Um eine vorteilhafte Stabilisierung der Messrohre zu erzielen, ist erfindungsgemäß vorgesehen, dass die Erweiterung in einer Ebene orthogonal zur Grundfläche ausgebildet ist. Die Erweiterung erstreckt sich folglich nicht in der Ebene der Grundfläche, sondern orthogonal zu der Ebene der Grundfläche. Diese Schwingungsknotenplatte, die mit der Gehäusestruktur verbunden ist, erstreckt sich folglich mindestens in zwei Ebenen. Vorzugsweise ist die Schwingungsknotenplatte über die Erweiterung mit der Gehäusestruktur verbunden. Die beiden Ebenen der Schwingungsknotenplatte, nämlich die Ebene der Grundfläche und die Ebene der Erweiterung, schneiden sich orthogonal. Wenn hier von Ebenen die Rede ist, dann wird bei dieser Betrachtung die Materialstärke der Grundfläche und der Erweiterung nicht berücksichtigt.

Vorzugsweise sind die Elemente der Grundfläche und der Erweiterung als verschweißte Teile ausgestaltet, beispielsweise indem die Erweiterung in Form eines Steges an die Grundfläche angeschweißt ist. Die Erweiterung erstreckt sich vorteilhaft mittig zwischen den beiden die Grundfläche durchtretenden Messrohren, so dass die Ebene der Erweiterung parallel zu den Messrohrachsen verläuft. Je nach Ausgestaltung und Größe des Coriolis-Massedurchflussmessgeräts ist eine Erweiterung vorgesehen, die aus mindestens zwei parallelen Stegen gebildet ist.

Der Steg, durch den die Erweiterung gebildet wird, erstreckt sich beispielsweise in einem bestimmten Winkel zur Grundfläche, so dass die Grundfläche im Montagezustand von den schräg verlaufenden Messrohren orthogonal durchtreten wird und gleichzeitig die Erweiterung auf einer Fläche der Gehäusestruktur gleichmäßig und kraftschlüssig aufgesetzt ist. Die Erweiterung ist lediglich auf einer Oberfläche der Grundfläche befestigt, es ist jedoch alternativ auch vorgesehen, dass die Erweiterung die Grundfläche durchtritt und an einer weiteren Oberfläche befestigt ist. Die Grundfläche ist dazu zumindest teilweise mit einem Schlitz versehen, in den die Erweiterung eingesteckt wird.

Zur Erreichung einer vorteilhaften Steifigkeit der Schwingungsknotenplatte ist gemäß einer weiteren Ausgestaltung vorgesehen, dass die Materialstärke der mit der Gehäusestruktur verbundenen Schwingungsknotenplatte gleich oder größer als die Wandstärke der Messrohre ist. Dadurch lässt sich eine ausreichende Steifigkeit der Schwingungsknotenplatte gewährleisten, um die ungewünschten Schwingungsmodi zu vermeiden bzw. die ungewünschten Eigenfrequenzen konstruktiv von der Arbeitsfrequenz zu entfernen. Mit der Materialstärke der Schwingungsknotenplatte ist dabei sowohl die Materialstärke der Grundfläche als auch der Erweiterung gemeint.

Als besonders vorteilhaft für die Steigerung der Biegesteifigkeit der Schwingungsknotenplatte hat sich herausgestellt, wenn die Erweiterung und die Grundfläche eine unterschiedliche Materialstärke aufweisen, insbesondere dass die Erweiterung eine größere Materialstärke als die Grundfläche aufweist. Die Grundfläche verbindet die beiden Messrohre miteinander, während die Erweiterung der Verbindung der Grundfläche mit der Gehäusestruktur des Coriolis-Massedurchflussmessgeräts dient. Dazu ist die Erweiterung vorzugsweise dicker als die Grundfläche ausgestaltet, so dass die Erweiterung eine größere Biegesteifigkeit aufweist. Die Schwingungsknotenplatte aus Grundplatte und Erweiterung ist dazu beispielsweise als Schweißteil aus mindestens zwei Bauelementen ausgestaltet.

Ein weiterer Faktor der die Biegesteifigkeit der Schwingungsknotenplatte vorteilhaft beeinflusst, ist gemäß einer weiteren Ausgestaltung, dass die Länge der Seitenkanten der Grundfläche und die Länge der Seitenkanten der Erweiterung größer als die Materialstärke der Grundfläche und der Erweiterung sind. Die Grundfläche und die Erweiterung sind vorzugsweise aus dünnem Blech oder einer Metallplatte gefertigt, so dass die Länge und Breite der Grundfläche und die Länge und Breite der Erweiterung stets wesentlich größer als die Dicke der Grundfläche und der Erweiterung sind, wodurch vorteilhafte Biegeeigenschaften erzielt werden. Gleichzeitig wird das Gewicht der Schwingungsknotenplatten durch diese einfache Konstruktion reduziert.

Das Gesamtgewicht des Coriolis-Massedurchflussmessgeräts wird gemäß einer weiteren Ausgestaltung ferner dadurch reduziert, dass die Materialstärke der mit der Gehäusestruktur verbundenen Schwingungsknotenplatte geringer als die der mindestens einen anderen Schwingungsknotenplatte ist. Die mit der Gehäusestruktur verbundene Schwingungsknotenplatte ist somit dünner als die anderen Schwingungsknotenplatten. Während die anderen Schwingungsknotenplatten primär zur Bildung von Schwingungsknoten zwischen den Messrohren dienen, dient die mit der Gehäusestruktur verbundene Schwingungsknotenplatte primär der Verschiebung von ungewünschten Eigenfrequenzen weg von der Arbeitsfrequenz des Coriolis-Massedurchflussmessgeräts, weshalb die Materialstärke der mit der Gehäusestruktur verbundenen Schwingungsknotenplatte reduziert werden kann.

Des Weiteren hat sich gemäß einer Ausgestaltung als vorteilhaft herausgestellt, wenn der Abstand zwischen der ersten Schwingungsknotenplatte und der zweiten Schwingungsknotenplatte geringer ist der Abstand zwischen der zweiten Schwingungsknotenplatte und der dritten Schwingungsknotenplatte ist. Mit Abstand ist dabei der Abstand, gemessen anhand der auf den Messrohren überstrichenen Strecke gemeint. Die dritte Schwingungsknotenplatte ist dabei jeweils die am nächsten zum Rohrende angeordnete Schwingungsknotenplatte, während die erste Schwingungsknotenplatte die Schwingungsknotenplatte ist, die am weitesten vom entsprechenden Rohrende entfernt ist. Die primär der Bildung von Schwingungsknoten dienenden Schwingungsknotenplatten, nämlich die erste und die zweite Schwingungsknotenplatte, weisen einen geringeren Abstand zueinander auf, während die dritte Schwingungsknotenplatte, die der Verbindung mit der Gehäusestruktur dient, einen größeren Abstand zu den anderen beiden aufweist. Durch diese Ausgestaltung kann eine vorteilhafte Verschiebung der ungewünschten Eigenfrequenzen erfolgen und das Auskoppeln von Schwingungen der Messrohre auf das umgebende Rohrleitungssystem unterbunden werden.

Gemäß einer letzten Ausgestaltung des Coriolis-Massedurchflussmessgeräts ist vorgesehen, dass vier gebogene Messrohre vorhanden sind. Die vier gebogenen Messrohre ermöglichen im Vergleich zu lediglich zwei gebogenen Messrohren einen größeren Massedurchsatz, wobei sich sämtliche der vorangehend beschriebenen Vorteile identisch auch für das Coriolis-Massedurchflussmessgerät mit vier gebogenen Messrohren ergeben.

Im Einzelnen gibt es nun eine Vielzahl von Möglichkeiten das erfindungsgemäße Coriolis-Massedurchflussmessgerät auszugestalten und weiterzubilden. Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein erfindungsgemäßes Ausführungsbeispiel eines Coriolis-Massedurchflussmessgeräts in Seitenansicht,
- Fig. 2: ein Ausführungsbeispiel eines Coriolis-Massedurchflussmessgeräts in Seitenansicht,
- Fig. 3: eine geschnittene Detailansicht eines Ausführungsbeispiels eines Coriolis-Massedurchflussmessgeräts,
- Fig. 4: eine geschnittene perspektivische Seitenansicht eines Coriolis-Massedurchflussmessgeräts,
- Fig. 5a: ein erfindungsgemäßes Ausführungsbeispiel einer Schwingungsknotenplatte zur Befestigung an einer Gehäusestruktur in einer Seitenansicht,
- Fig. 5b: das erfindungsgemäße Ausführungsbeispiel gemäß Fig. 5a in einer weiteren Seitenansicht,
- Fig. 5c: das erfindungsgemäße Ausführungsbeispiel gemäß Fig. 5a und 5b in einer Draufsicht, und
- Fig. 6: ein Ausführungsbeispiel einer Schwingungsknotenplatte zur Befestigung an einer Gehäusestruktur in einer Seitenansicht.

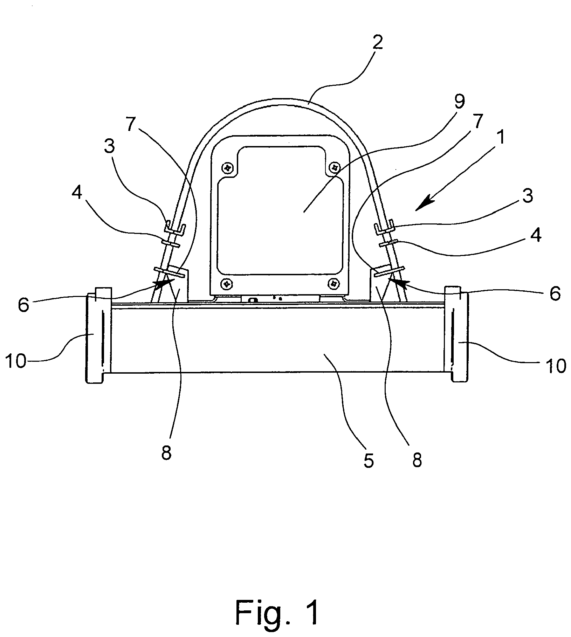

Fig. 1 zeigt ein Coriolis-Massedurchflussmessgerät 1 mit zwei gebogenen Messrohren 2. Die Aktuatoranordnung und die Sensoranordnungen sind in Fig. 1 nicht dargestellt. Einlaufseitig und auslaufseitig sind die Messrohre 2 mit einer ersten Schwingungsknotenplatte 3 und einer zweiten Schwingungsknotenplatte 4 zusammengefasst. Zur einlaufseitigen und auslaufseitigen Befestigung an der Gehäusestruktur 5 ist eine dritte Schwingungsknotenplatte 6 auf beiden Seiten angeordnet, die ebenfalls die Messrohre 2 zusammenfasst. Die dritte Schwingungsknotenplatte 6, die mit der Gehäusestruktur 5 verbunden ist, umfasst eine Grundfläche 7, wobei die Grundfläche 7 orthogonal von den Messrohren 2 durchtreten wird.

Die Messrohre 2 sind fest mit der Grundfläche 7 verbunden. Die Grundfläche 7 ist als flache Platte ausgestaltet. An der Grundfläche 7 ist eine Erweiterung 8 ausgebildet. Die Ebene der Erweiterung 8 verläuft bei diesem Ausführungsbeispiel orthogonal zur Ebene der Grundfläche 7. Die dritte Schwingungsknotenplatte 6 ist - einlaufseitig und auslaufseitig - mit der Erweiterung 8 mit der Gehäusestruktur 5 des Coriolis-Massedurchflussmessgeräts 1 verbunden. Der Steg, der durch die Erweiterung 8 gebildet wird, ist in einem Winkel zur Ebene der Grundfläche 7 angeordnet und stützt sich auf einer Fläche der Gehäusestruktur 5 kraftschlüssig ab.

Die Erweiterung 8 ist derart ausgestaltet, dass sie die Ebene der Grundfläche 7 durchtritt und an der Grundfläche 7 befestigt ist. Die dritte Schwingungsknotenplatte 6 erstreckt sich somit in zwei Ebenen, wodurch eine vorteilhafte Biegesteifigkeit erzielt wird. Die Erweiterung 8 ist im oberen Bereich - siehe Fig. 1, nämlich im Bereich der Grundfläche 7, breiter ausgestaltet als im unteren Bereich - siehe Fig. 1, an der sich die Erweiterung 8 auf der Gehäusestruktur 5 abstützt. Die Ebene der Erweiterung 8 erstreckt sich dabei mittig in der Grundfläche 7 zwischen den beiden Messrohren 2, parallel zu den Mittelachsen der beiden Messrohre. Durch diese Ausgestaltung lässt sich eine vorteilhafte Biegesteifigkeit der dritten Schwingungsknotenplatte 6 erreichen.

In Fig. 1 sind neben der für den Betrieb des Coriolis-Massedurchfluss-messgeräts 1 notwendigen Messgeräteelektronik 9 auch die zum rohrseitigen Anschluss des Coriolis-Massedurchflussmessgeräts 1 dienenden Flansche 10 dargestellt. Die Messrohre 2 stehen einlaufseitig und auslaufseitig mit den Flanschen 10 in Verbindung, haben aber neben der Verbindung über die Erweiterung 8 der dritten Schwingungsknotenplatte 6 keinen Kontakt zur Gehäusestruktur 5 des Coriolis-Massedurchflussmessgeräts 1.

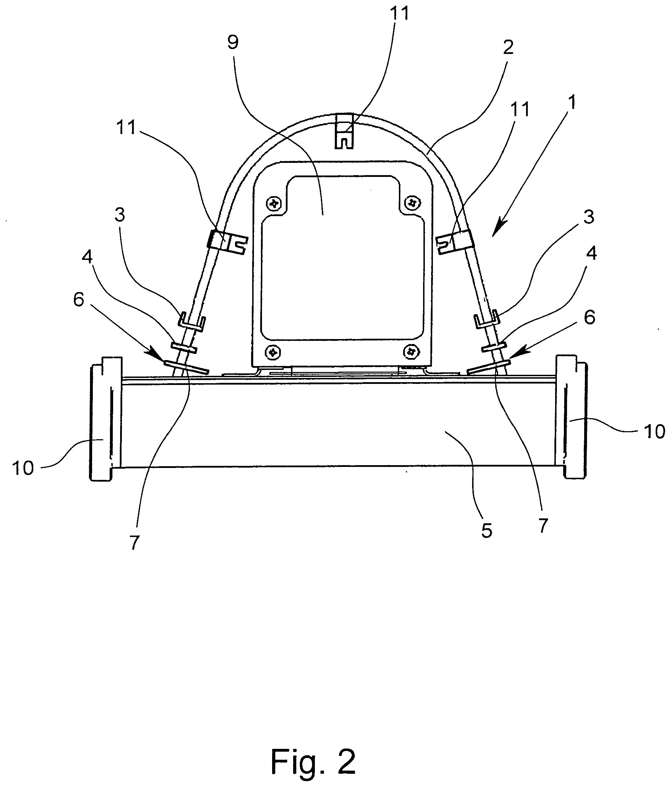

Fig. 2 zeigt ein weiteres Ausführungsbeispiel eines Coriolis-Massedurchflussmessgeräts 1 mit zwei gebogenen Messrohren 2. An den Messrohren 2 sind die Haltevorrichtungen 11 für die - nicht dargestellten - Aktuator- und Sensoranordnungen befestigt. Auch bei diesem Ausführungsbeispiel sind die Messrohre 2 einlaufseitig und auslaufseitig mit einer ersten Schwingungsknotenplatte 3 und einer zweiten Schwingungsknotenplatte 4 zusammengefasst. Ferner ist eine dritte Schwingungsknotenplatte 6 vorgesehen, die mit der Gehäusestruktur 5 des Coriolis-Massedurchflussmessgeräts 1 verbunden ist und mit der die Messrohre 2 ebenfalls zusammengefasst sind.

Die dritte Schwingungsknotenplatte 6 besteht bei dem Ausführungsbeispiel gemäß Fig. 2 lediglich aus einer Grundfläche 7, die sich in einer einzigen Ebene erstreckt und orthogonal von den Messrohren 2 durchtreten wird. Die dritte Schwingungsknotenplatte 6 hat eine quadratische Grundfläche 7, wobei sich die Durchgangslöcher 12 für die Messrohre 2 außermittig befinden und sich die dritte Schwingungsknotenplatte 6 auf einer Seite der Messrohre 2 weiter erstreckt als auf der anderen Seite - die Durchgangslöcher für die Messrohre 2 sind in der einen rechteckigen Hälfte der quadratischen Grundfläche 7 angeordnet. Auf der Seite, auf der sich die dritte Schwingungsknotenplatte 6 bzw. die Grundfläche 7 weiter erstreckt, stützt sich diese mit der auf der Gehäusestruktur 5 ab bzw. ist mit dieser verbunden.

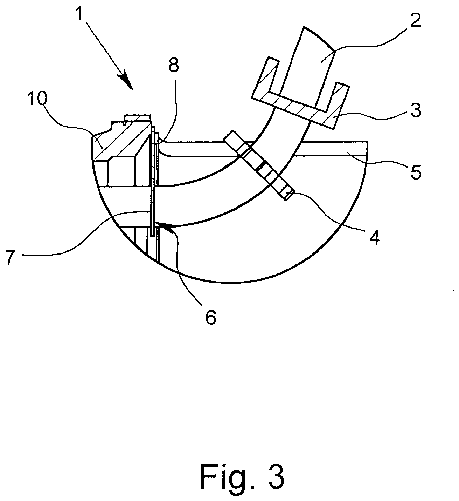

Fig. 3 zeigt einen Ausschnitt eines weiteren Ausführungsbeispiels eines Coriolis-Massedurchflussmessgeräts 1 mit zwei gebogenen Messrohren 2. Dargestellt ist das einlaufseitige Ende der Messrohre 2 an denen die Messrohre 2 mit einer ersten Schwingungsknotenplatte 3, einer zweiten Schwingungsknotenplatte 4 und einer dritten Schwingungsknotenplatte 6 zusammengefasst sind. Die dritte Schwingungsknotenplatte 6 weist eine Erweiterung 8 auf, die sich in der Ebene der Grundfläche 7 erstreckt. Die Erweiterung 8 ist mit der Gehäusestruktur 5 des Coriolis-Massedurchflussmessgeräts 1 verbunden. Die Messrohre 2 haben lediglich über die dritte Schwingungsknotenplatte 6 und über die Verbindung mit den Flanschen 10 einen Kontakt zur Gehäusestruktur 5 des Coriolis-Massedurchflussmessgeräts 1.

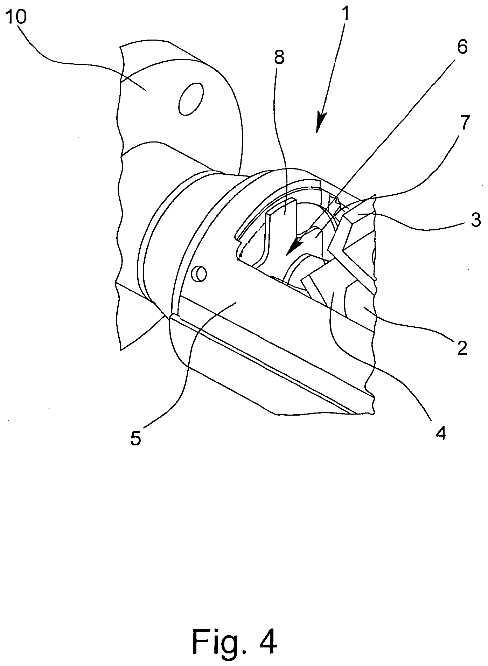

Fig. 4 zeigt einen Ausschnitt eines weiteren Ausführungsbeispiels eines Coriolis-Massedurchflussmessgeräts 1 in perspektivischer Seitenansicht. Die Gehäusestruktur 5 des Coriolis-Massedurchflussmessgeräts 1 ist teilweise geöffnet. Die dritte Schwingungsknotenplatte 6 weist eine Grundfläche 7 auf, an der eine Erweiterung 8 angeordnet ist. Die Erweiterung 8 erstreckt sich auch bei diesem Ausführungsbeispiel in der Ebene der Grundfläche 7. Die dritte Schwingungsknotenplatte 6 ist über die Erweiterung 8 mit der Gehäusestruktur 5 des Coriolis-Massedurchflussmessgeräts 1 verbunden.

Die dritte Schwingungsknotenplatte 6 stützt sich dabei mit der Erweiterung 8 kraftschlüssig an der Gehäusestruktur 5 des Coriolis-Massedurchflussmessgeräts 1 ab, so dass Kräfte in Axialrichtung der Messrohre 2 auf die Gehäusestruktur 5 des Coriolis-Massedurch-flussmessgeräts 1 übertragen werden, jedoch eine Schwingung der beiden Messrohre um eine gemeinsame Achse durch die dritte Schwingungsknotenplatte 6 bei diesem Ausführungsbeispiel nicht unterbunden wird, da die Erweiterung 8 der dritten Schwingungsknotenplatte 6 entlang der Gehäusestruktur 5 des Coriolis-Massedurchflussmessgeräts 1 in dieser Richtung bewegbar ist. Durch eine derartige Anordnung der dritten Schwingungsknotenplatte 6 werden insbesondere Schwingungen in Axialrichtung der Messrohre 2 unterbunden.

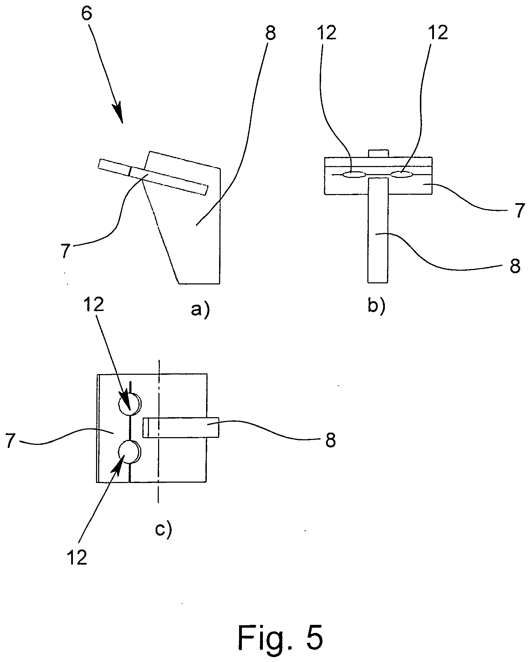

Fig. 5 a), 5 b) und 5 c) zeigen ein Ausführungsbeispiel einer Schwingungsknotenplatte 6 zur Verbindung mit einer Gehäusestruktur 5 eines Coriolis-Massedurchflussmessgeräts 1 gemäß Fig. 1 in verschiedenen Ansichten. Die Ebene der Grundfläche 7 der Schwingungsknotenplatte 6 verläuft orthogonal zur Ebene der Erweiterung 8 der Schwingungsknotenplatte 6. Die Schwingungsknotenplatte 6 erstreckt sich somit in zwei Ebenen, wobei die Materialstärke der Grundfläche 7 und der Erweiterung 8 bei dieser Betrachtung der "Ebenen" unberücksichtig bleibt.

Die Materialstärke der Erweiterung 8 ist bei diesem Ausführungsbeispiel etwa doppelt so groß wie die Materialstärke der Grundfläche 7. Um die Biegesteifigkeit der Schwingungsknotenplatte 6 zu verbessern, sind die Länge und die Breite der Grundfläche 7 und der Erweiterung 8 jeweils wesentlich größer als die entsprechende Materialstärke. Die Grundfläche 7 weist zwei Durchgangsöffnungen 12 für die Messrohre 2 auf, so dass die Messrohre 2 die Grundfläche 7 im Montagezustand orthogonal durchtreten. Der durch die Erweiterung 8 ausgebildete Steg ist derart ausgestaltet, dass er sich im oberen Bereich, in dem die Erweiterung 8 mit der Grundfläche 7 verbunden ist, breiter als im unteren Bereich ist, an dem die Erweiterung 8 mit der Gehäusestruktur 5 des Coriolis-Massedurchflussmessgeräts 1 verbunden ist. Die Materialstärke der Grundfläche 7 entspricht bei diesem Ausführungsbeispiel der Wandstärke der Messrohre 2.

Gemäß den Fig. 5 a) bis 5 c) entspricht die Breite der Grundfläche - Erstreckung in Fig. 5 c) von links nach rechts - etwa dem 5-fachen des Messrohrdurchmessers. Da die Grundfläche 7 quadratisch ausgestaltet ist, entspricht auch die Länge der Grundfläche 7 - Erstreckung in Fig. 5 c) von oben nach unten - etwa dem 5-fachen eines Messrohrdurchmessers.

Gemäß Fig. 5 a) entspricht die Länge der Erweiterung 8 - Erstreckung von unten nach oben - etwa dem 1,5-fachen der Breite bzw. der Länge der Grundfläche 7. Die Breite der Erweiterung 8 - Erstreckung von links nach rechts in Fig. 5 a) - entspricht im unteren Bereich etwa der Hälfte der Breite im oberen Bereich, wobei die Breite im oberen Bereich etwa dem Vierfachen des Messrohrdurchmessers entspricht.

Die Erweiterung erstreckt sich sowohl oberhalb als auch unterhalb der Grundfläche 7, wodurch die Grundfläche 7 vorteilhaft mit der Erweiterung 8 verbunden werden kann. Die Länge der Erweiterung 8 - Erstreckung zwischen Gehäusestruktur 5 und Grundplatte 7 gemäß Fig. 5 a) - ist derart bemessen, dass die Gehäusestruktur 5 ausgehend von den Messrohren 2 bzw. der Grundplatte 7 erreicht werden kann. Bei dem Ausführungsbeispiel gemäß den Fig. 5 a) bis 5 c) ist die Grundfläche der Schwingungsknotenplatte 6 quadratisch ausgestaltet, wobei die Durchgangslöcher 12 für die Messrohre 2 dezentral angeordnet sind, so dass sich die Grundfläche 7 auf einer Seite der Messrohre 2 weiter erstreckt als auf der anderen Seite. Auf der Seite, auf der sich die Grundfläche 7 weiter von den Messrohren 2 erstreckt - rechts in Fig. 5 c), ist die Erweiterung 8 mittig zwischen den beiden Durchgangslöchern 12 für die Messrohre an der Grundfläche 7 befestigt.

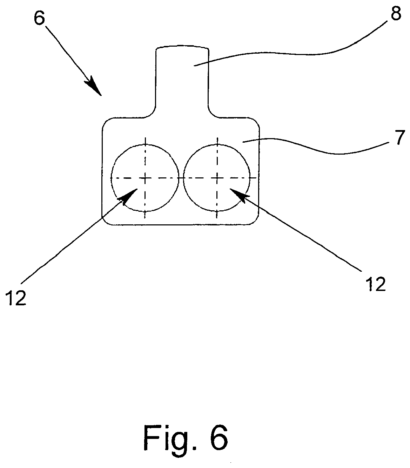

Fig. 6 zeigt eine Seitenansicht eines Ausführungsbeispiels einer Schwingungsknotenplatte 6 gemäß den Ausführungsbeispielen in Fig. 3 und 4. Die Grundfläche 7 der Schwingungsknotenplatte 6 ist im Wesentlichen rechteckig ausgestaltet, wobei die Durchgangslöcher 12 für die Messrohre 2 zentral in der im Wesentlichen rechteckigen Grundfläche 7 angeordnet sind. Die Breite der Grundfläche 7 - Erstreckung in Richtung der beiden nebeneinander angeordneten Messrohre - entspricht bei diesem Ausführungsbeispiel etwa dem 2,25-fachen des Durchmessers eines Messrohrs 2. Die Länge der Grundfläche 7 - Erstreckung in Richtung jeweils eines Messrohrs 2 - entspricht bei diesem Ausführungsbeispiel etwa dem 1,5-fachen des Messrohrdurchmessers.

An der in Fig. 6 oben dargestellten Seite der Grundfläche 7 ist die Erweiterung 8 angeordnet, die sich in der Ebene der Grundfläche 7 erstreckt. Die Breite der Erweiterung 8 ist geringer als die Breite der Grundfläche 7, wobei die Breite der Erweiterung 8 bei diesem Ausführungsbeispiel etwa die Hälfte der Breite der Grundfläche 7 aufweist. Die Länge der Erweiterung 8 ist an den Abstand von den Messrohren 2 zur Gehäusestruktur 5 des Coriolis-Massedurchflussmessgeräts 1 angepasst und entspricht bei diesem Ausführungsbeispiel etwa dem Messrohrdurchmesser. Die Materialstärke der Schwingungsknotenplatte 6 entspricht der Wandstärke der Messrohre 2.

Die in Fig. 6 dargestellte Schwingungsknotenplatte 6 eignet sich vorzugsweise zum verhindern von Schwingungen in Axialrichtung der Messrohre 2, die im Montagezustand die Durchgangslöcher 12 orthogonal durchtreten. Gemäß dem Ausführungsbeispiel in Fig. 4 ist für die Erweiterung 8 in Drehrichtung um die gemeinsame Drehachse der Messrohre 2 im Montagezustand eine Bewegungsfreiheit vorgesehen.

## Patentansprüche

1. Coriolis-Massedurchflussmessgerät (1) mit mindestens zwei gebogenen Messrohren (2), mindestens einer Aktuatoranordnung, mindestens einer Sensoranordnung und mit mindestens einer Gehäusestruktur (5), wobei die Messrohre (2) an ihren Enden durch Sammler oder Flansche (10) zusammengefasst sind, wobei die Messrohre (2) einlaufseitig und auslaufseitig mit mindestens einer ersten Schwingungsknotenplatte (3) und einer zweiten Schwingungsknotenplatte (4) zusammengefasst sind, wobei die Schwingungsknotenplatten (3, 4) von den Sammlern oder Flanschen (10) grundsätzlich zu unterscheiden sind, da die Sammler oder Flansche (10) nicht primär zur Veränderung der Schwingungseigenschaften der Messrohre (2) vorgesehen sind, wobei einlaufseitig und auslaufseitig mindestens eine der Schwingungsknotenplatten mit der Gehäusestruktur (5) des Coriolis-Massedurchflussmessgeräts (1) verbunden ist, wobei die mit der Gehäusestruktur (5) verbundene Schwingungsknotenplatte (6) eine Grundfläche (7) aufweist, und wobei die Grundfläche (7) der Schwingungsknotenplatte (6) von den Messrohren (2) durchtreten wird,
**dadurch gekennzeichnet,**
**dass** an der Grundfläche (7) der Schwingungsknotenplatte (6) eine Erweiterung (8) ausgebildet ist, und dass die Schwingungsknotenplatte (6) mit der Erweiterung (8) an der Gehäusestruktur (5) befestigt ist und dass die Erweiterung (8) in einer Ebene orthogonal zur Grundfläche (7) der Schwingungsknotenplatte (6) ausgebildet ist.

2. Coriolis-Massedurchflussmessgerät (1) nach Anspruch 1, **dadurch gekennzeichnet, dass** einlaufseitig und auslaufseitig zusätzlich eine dritte Schwingungsknotenplatte (6) angeordnet ist, vorzugsweise die dritte Schwingungsknotenplatte (6) mit der Gehäusestruktur (5) verbunden ist.

3. Coriolis-Massedurchflussmessgerät (1) nach einem der Ansprüche 1 bis 2, **dadurch gekennzeichnet, dass** die Materialstärke der mit der Gehäusestruktur (5) verbundenen Schwingungsknotenplatte (6) gleich oder größer als die Wandstärke der Messrohre (2) ist.

4. Coriolis-Massedurchflussmessgerät (1) nach einem der Ansprüche 1 bis 3, **dadurch gekennzeichnet, dass** die Erweiterung (8) und die Grundfläche (7) eine unterschiedliche Materialstärke aufweisen, insbesondere dass die Erweiterung (8) eine größere Materialstärke als die Grundfläche (7) aufweist.

5. Coriolis-Massedurchflussmessgerät (1) nach einem der Ansprüche 1 bis 4, **dadurch gekennzeichnet, dass** die Länge der Seitenkanten der Grundfläche (7) und die Länge der Seitenkanten der Erweiterung (8) größer als die Materialstärke der Grundfläche (7) und der Erweiterung (8) ist.

6. Coriolis-Massedurchflussmessgerät (1) nach einem der Ansprüche 1 bis 5, **dadurch gekennzeichnet, dass** die Materialstärke der mit der Gehäusestruktur (5) verbundenen Schwingungsknotenplatte (6) geringer als die der mindestens einen anderen Schwingungsknotenplatte (3, 4) ist.

7. Coriolis-Massedurchflussmessgerät (1) nach einem der Ansprüche 2 bis 6, **dadurch gekennzeichnet, dass** der Abstand zwischen der ersten Schwingungsknotenplatte (3) und der zweiten Schwingungsknotenplatte (4) geringer als der Abstand zwischen der zweiten Schwingungsknotenplatte (4) und der dritten Schwingungsknotenplatte (6) ist.

8. Coriolis-Massedurchflussmessgerät (1) nach einem der Ansprüche 1 bis 7, **dadurch gekennzeichnet, dass** vier gebogene Messrohre (2) vorhanden sind.

## Claims

1. Coriolis mass flow meter (1) comprising at least two curved measurement tubes (2), at least one actuator arrangement, at least one sensor arrangement and comprising at least one housing structure (5), wherein the measurement tubes (2) are combined by collectors or flanges (10) on the inlet side and the outlet side with at least a first oscillation node plate (3) and a second oscillation node plate (4), wherein the oscillation node plates (3, 4) are to be basically differentiated from the collectors or flanges (10) since the collectors or flanges (10) are not primarily provided for changing the oscillation character of the measurement tube (2), wherein at least one of the oscillation node plates is connected on the inlet side and the outlet side to the housing structure (5) o the Coriolis mass flow meter (1), wherein the oscillation node plate (6) connected to the housing structure (5) has a base face (7), and wherein the base face (7) of the oscillation node plate (6) is passed through by the measurement tubes (2)
**characterized in**
an extension (8) is formed on the base face (7) of the oscillation node plate (6), and that the oscillation node plate (6) is fastened on the housing structure (5) by means of the extension (8) and that the extension (8) extends in a plane orthogonal to the base face (7) of the oscillation node plate (6).

2. Coriolis mass flow meter (1) according to claim 1, **characterized in that** a third oscillation node plate (6) is additionally arranged on the inlet side and the outlet side, preferably the third oscillation node plate (6) is connected to the housing structure (5).

3. Coriolis mass flow meter (1) according to claim 1 or 2, **characterized in that** the material thickness of the oscillation node plate (6) connected to the housing structure (5) is equal to or greater than the wall thickness of the measurement tubes (2).

4. Coriolis mass flow meter (1) according to any one of claims 1 to 3, **characterized in that** the extension (8) and the base face (7) have different material thicknesses, and in particular **in that** the extension (8) has a greater material thickness than the base face (7).

5. Coriolis mass flow meter (1) according to any one of claims 1 to 4, **characterized in that** the length of the side edges of the base face (7) and the length of the side edges of the extension (8) are greater than the material thickness of the base face (7) and of the extension (8).

6. Coriolis mass flow meter (1) according to any one of claims 1 to 5, **characterized in that** the material thickness of the oscillation node plate (6) connected to the housing structure (5) is less than that of the at least one other oscillation node plate (3, 4).

7. Coriolis mass flow meter (1) according to any one of claims 2 to 6, **characterized in that** the distance between the first oscillation node plate (3) and the second oscillation node plate (4) is less than the distance between the second oscillation node plate (4) and the third oscillation node plate (6).

8. Coriolis mass flow meter (1) according to any one of claims 1 to 7, **characterized in that** four curved measurement tubes (2) are provided.

## Revendications

1. Débitmètre massique de type Coriolis (1) comprenant au moins deux tubes de mesure incurvés (2), au moins un ensemble d'actionneurs, au moins un ensemble de capteurs et au moins une structure de boîtier (5), les tubes de mesure (2) étant réunis à leurs extrémités par des collecteurs ou des brides (10), les tubes de mesure (2) étant réunis côté entrée et côté sortie à au moins une première plaque de nœud de vibration (3) et une deuxième plaque de nœud de vibration (4), les plaques de nœud de vibration (3, 4) devant fondamentalement être distinguées des collecteurs ou brides (10), car les collecteurs ou brides (10) n'étant pas essentiellement prévus pour modifier les propriétés de vibration des tubes de mesure (2), l'une au moins des plaques de nœud de vibration étant reliée du côté entrée et du côté sortie à la structure de boîtier (5) du débitmètre massique de type Coriolis (1), la plaque de nœud de vibration (6) reliée à la structure de boîtier (5) comportant une surface de base (7), et la surface de base (7) de la plaque de nœud de vibration (6) étant traversée par les tubes de mesure (2),
**caractérisé en ce que**
une extension (8) est formée sur la surface de base (7) de la plaque de nœud de vibration (6), et
la plaque de nœud de vibration (6) est fixée à la structure de boîtier (5) par le biais de l'extension (8) et
l'extension (8) est formée dans un plan orthogonal à la surface de base (7) de la plaque de nœud de vibration (6) .

2. Débitmètre massique de type Coriolis (1) selon la revendication 1, **caractérisé en ce qu'**une troisième plaque de nœud de vibration (6) est en outre disposée côté entrée et côté sortie, de préférence la troisième plaque de nœud de vibration (6) est reliée à la structure de boîtier (5).

3. Débitmètre massique de type Coriolis (1) selon l'une des revendications 1 à 2, **caractérisé en ce que** l'épaisseur de matière de la plaque de nœud de vibration (6) reliée à la structure de boîtier (5) est supérieure ou égale à l'épaisseur de paroi des tubes de mesure (2).

4. Débitmètre massique de type Coriolis (1) selon l'une des revendications 1 à 3, **caractérisé en ce que** l'extension (8) et la surface de base (7) ont des épaisseurs de matière différentes, en particulier **en ce que** l'extension (8) a une épaisseur de matière supérieure à celle de la surface de base (7).

5. Débitmètre massique de type Coriolis (1) selon l'une des revendications 1 à 4, **caractérisé en ce que** la longueur des bords latéraux de la surface de base (7) et la longueur des bords latéraux de l'extension (8) est supérieure à l'épaisseur de matière de la surface de base (7) et à celle de l'extension (8).

6. Débitmètre massique de type Coriolis (1) selon l'une des revendications 1 à 5, **caractérisé en ce que** l'épaisseur de matière de la plaque de nœud de vibration (6) reliée à la structure de boîtier (5) est inférieure à celle de l'au moins une autre plaque de nœud de vibration (3, 4).

7. Débitmètre massique de type Coriolis (1) selon l'une des revendications 2 à 6, **caractérisé en ce que** la distance entre la première plaque de nœud de vibration (3) et la deuxième plaque de nœud de vibration (4) est inférieure à la distance entre la deuxième plaque de nœud de vibration (4) et la troisième plaque de nœud de vibration (6).

8. Débitmètre massique de type Coriolis (1) selon l'une des revendications 1 à 7, **caractérisé par** la présence de quatre tubes de mesure incurvés (2).
